# EUROPEAN PATENT SPECIFICATION

(11) **EP 3 672 154 B1**
(45) Date of publication and mention of the grant of the patent: **14.06.2023**
(21) Application number: 18382962.1
(22) Date of filing: 20.12.2018
(51) Int. Cl.: H04L 41/50, H04L 41/5025, H04L 41/5009, H04L 41/0823, H04L 41/5067, H04L 65/80, H04L 65/612, H04L 65/613, H04L 43/0852, H04L 43/087, H04L 43/0888

(54) **OPTIMISING TRANSMISSION OF STREAMING VIDEO CONTENTS BASED ON QOE METRICS**
OPTIMIERUNG DER ÜBERTRAGUNG VON STREAMING-VIDEOINHALTEN AUF BASIS VON QOE-METRIKEN
OPTIMISATION DE LA TRANSMISSION DE DIFFUSION EN CONTINU DE CONTENUS VIDÉO BASÉE SUR DES MESURES DE QUALITÉ D'EXPÉRIENCE

(43) Date of publication of application: 24.06.2020
(73) Proprietor: FUNDACION CENTRO DE TECNOLOGIAS DE INTERACCION VISUAL Y COMUNICACIONES VICOMTECH, 20009 San Sebastian (ES); Universidad del Pais Vasco - Euskal Herriko Unibertsitatea (UPV/EHU), 48940 Leioa (ES)
(72) Inventor: Martín, Angel, 20009 San Sebastián (ES); Zorrilla, Mikel, 20009 San Sebastián (ES); Flórez, Julián, 20009 San Sebastián (ES); Gabilondo, Alvaro, 20009 San Sebastián (ES); Viola, Roberto, 20009 San Sebastián (ES); Montalban, Jon, 48940 Leioa (ES); Angueira, Pablo, 48940 Leioa (ES)
(74) Representative: Balder IP Law, S.L.

(56) References cited:
- EP-A1- 2 866 406
- WO-A1-2013/048484

## Description

### TECHNICAL FIELD

The present disclosure generally relates to networking systems and methods. More particularly, the present disclosure relates to systems and methods for optimizing transmission of streaming video contents based on Quality-of-Experience (QoE) metrics received from end-user video players.

### BACKGROUND OF THE DISCLOSURE

Due to the fast development of network services and the growth of smart devices, streaming media applications are becoming very popular. For instance, in the field of over-the-top (OTT) video delivery, several methods, such as HTTP Live Streaming (HLS), Silverlight Smooth Streaming (MSS), HTTP Dynamic Streaming (HDS), and Dynamic Adaptive Streaming over HTTP (DASH), are being used to transmit video streams from video hosting servers to video players implemented on user terminals over the corresponding network connections.

OTT video delivery includes delivery of audio, video, subtitles, and/or other media contents over the Internet without the involvement of a Service Provider (e.g., network operators, Multiple-System Operator (MSO), etc.) in the control, viewing, playback or redistribution of the content. Conventionally, OTT contents are created by content creators and then publicised by the content publishers in a wide variety of encodings and formats. The published contents are then distributed by the content distributors over a plurality of networks such as the Internet, Private Networks, Content Providers (CP), Cloud Networking Providers, Content Distribution Networks (CDN), Internet Service Provider (ISP) networks, and the like.

Quality-of-Experience (QoE) is a measure of a customer's experience with a particular service. QoE focuses on the entire service experience and better represents an subjective evaluation or perception than the user experience, customer-support experience or the Quality-of-Service (QoS). QoE metrics comprise user session specific detail and may also comprise key information from the content provider. These QoE metrics are directly gathered from the client video players.

Given the broad distribution of streaming video content and growing proliferation of viewing and playback devices for viewing such video content, publishers and distributors of video contents often need to monitor video environments, and video experiences in order to take needed actions to optimize video transmission in the shortest time interval. Therefore, the main objective of the streaming video providers is to try to achieve an optimal QoE of end viewers in order to provide an optimal streaming video delivery service.

However, nowadays, each participant on the video delivery pipeline (video content providers, video content publishers, video content distributors and video content service providers) has his own monitor and control systems to manage their platforms and services as islands. Thus, a common system that focuses on the QoE of end-users and enables all the participants in the video delivery chain to coordinate their operations based on common knowledge may be needed.

Besides, current solutions for video tracking either do not provide real-time video tracking or are limited as to the type of information and events that are tracked. Some of these solutions, such those provided by Cedexis^{©} or Conviva^{©}, offer limited services including only Quality-of-Service metrics (Level 3 Open System Interconnection (OSI) model) that are just valid for HTTP streams and do not include third party interfaces. In addition, most of the existing solutions provide access to the information gathered from the video delivery chain only to the network operators who can use this information for (self-organising network system to setup an elastic and efficient network) changing the cardinality of the network topology (provision of new nodes and deactivation of existing nodes with low usage) and changing the network topology base on to the dynamic distribution of the audience's servers and audience's clients. However, these solutions do not provide access to, for example the CDN providers, cloud infrastructure providers, multimedia service managers or technology providers such as encoding service providers, data package service providers, streaming service providers, and the like.

Document EP2866406 discloses a policy control method and device in which the management of the transmission between end-user equipment and the cells of the Radio Access Networks of a communications network is performed locally.

### DESCRIPTION OF THE INVENTION

The scope of the invention is defined by the attached claims.

As human users are, in most cases, the receiver of streaming video contents, a subjective evaluation of the user's experience can be considered as the most straightforward and reliable approach to evaluate the QoE of the streaming video contents received by the user.

Examples disclosed herein describe computer implemented methods for optimizing transmission of streaming video contents based on QoE metrics. The streaming video contents may be generally transmitted from a video hosting server to a video player on a terminal, for example a mobile device, a laptop computer, a desktop computer, workstation, tablet computer, smart device, etc., over a network connection, e.g., an Internet connection. The computer implemented method may comprise receiving, at an optimization module and from at least one video player communicatively coupled to the optimization module, at least one QoE metric related to a particular video stream that is being transmitted from the video hosting server to the video player. Then, the optimization module may analyse the at least one QoE metric with respect to at least one QoE policy associated to the received QoE metric. Based on the default QoE issues, identified QoE issues or predicted QoE issues derived from the analysis, the optimization module performs the optimization of the transmission of the particular video stream. The different QoE policies associated to the corresponding QoE metrics may be stored in a repository communicatively coupled to the optimization module. In some examples, there may be one QoE policy associated to the received QoE metric, while in some other examples there may be a plurality of QoE policies associated to the received QoE metric. The optimization module may further determine a set of adjustments relative to operative parameters of an application layer between the video hosting server and the video player in the transmission of the particular video stream based on the analysis performed. Then, the adjustment are notified to the corresponding participants on the video streaming content delivery pipeline controlling the application layer in the transmission of the particular video stream. These participants are video content providers, video content publishers, video content distributors, video content service providers, video encoding/streaming technology providers and media player's Internet Service Providers. After that, the optimization module may cause these adjustments to be applied in the application layer across the participants of the video streaming content delivery pipeline.

The optimization of the transmission of streaming video contents may be needed when based on the analysis performed, default QoE issues, identified QoE issues or predicted QoE issues are brought to light.

In some examples, the optimization module may analyse the at least one QoE metric with respect to the corresponding QoE policy in order to optimize the transmission of different video streams affected by similar default QoE issues, identified QoE issues or predicted QoE issues. This may provide a detailed and granular view of the video streams on which to apply general policies that may include groups of users about whom QoE related issues are identified or predicted.

As used herein, the application layer may refer to layer 7 in the seven-layer OSI model of computer networking. That is to say, the application layer may refer to the set of communication methods, interface protocols and algorithms used by hosts in the adjustments relative to operative parameters of a network layer in the transmission of the particular video stream based on the analysis. After that, the optimization module may cause these adjustments to be applied in the network layer.

As used herein, the network layer may refer to layer 3 in the seven-layer OSI model of computer networking. That is to say, the network layer may refer to the set of packet forwarding methods, protocols and algorithms between the source and a destination host via one or more networks. Therefore, the adjustments in the network layer may refer to adjustments in operative parameters of packet forwarding methods, packet forwarding protocols and packet forwarding algorithms.

In some examples, the optimization module may further generate at least one event based on the analysis performed. For example, the optimization module may generate events related to default QoE issues, identified QoE issues or predicted QoE issues, based on the QoE metrics received and analysed. Then, the optimization module may analyse the event generated with respect to thresholds defined in the at least one QoE policy. For example, the optimization module may evaluate the generated events to determine whether any thresholds have been violated. After that and when the event generated does not meet the thresholds, the optimization module may generate an alarm to notify the adjustments to a particular participant on the video streaming content delivery pipeline. The optimization module, to optimize the transmission of video streams, notifies to the corresponding participant (also named as value-chain participant) the need to apply further steps to cause the adjustments in the application layer. For example, the optimization module may identify a QoE issue based on the analysis performed and may notify a participant in the video streaming content delivery pipeline, e.g., a video content distributor, that the end-user is experiencing intermittent video playback so that this video content distributor may, for example, alternate the CDN from which the video contents are being retrieved or reduce the quality of the video contents being transmitted.

Alternatively, the optimization module, to optimize the transmission of video streams, may generate an action to cause, by means of specific Application Programming Interfaces (APIs), the adjustments to be directly and automatically applied in the application layer. For example, the optimization module may change to an alternate CDN from which the video contents are to be retrieved or may cause a reduction in the quality of the video contents being transmitted.

In both cases, whether the optimization module generates an alarm to notify the participants on the video streaming content delivery pipeline, so that the notified participant take the need further steps to cause the adjustments to be applied in the at least one of the network layer and the application layer, or the optimization module directly cause the adjustments to be applied in the application layer, the appropriate actions on the application layer to resolve the predicted (or currently active) issue are performed.

In examples in which the optimization module also determines a set of adjustments relative to operative parameters of the network layer, the optimization module may further generate at least one event based on the analysis. Then, the optimization module may analyse the event with respect to thresholds defined in the at least one QoE policy. After that, the optimization module may generate, when the event does not meet the thresholds, one of an alarm to notify the adjustments to a particular participant on the video streaming content delivery pipeline controlling the network layer and an action to cause the adjustments to be applied in the network layer. For example, when a group of users in a specific area are experiencing video freezes while the audio keeps playing, the optimization module may determine, based on the analysis performed, that there are some QoE issues. The time that the image remains frozen may be higher that the thresholds defined in the QoE policy and then, some adjustments may be need in the network layer. Based on that, the optimization module may notify the network operator that will apply changes in the network layer by, for example, changing the network topology or reinforcing some paths with new nodes to improve the performance of congested paths. In this way the identified QoE issue may be overcome.

As used herein, the video streaming content delivery pipeline may refer to the delivery chain between the creation of a video content until said streaming video content is delivered to an end-user. Thus, the participants or actors in the video streaming content delivery pipeline may be video content providers, video content publishers, video content distributors, video content service providers, video encoding/streaming technology providers, and media player's Internet Service Providers (ISPs).

In some examples, the optimization module may receive from at least one media server at least one QoS metric related to the particular video stream. With the received at least one QoS metric and the at least one QoE, the optimization module may analyse said at least one QoE metric with respect to the corresponding at least one QoE policy and the at least one QoS metric with respect to at least one QoS policy to perform the optimization of the transmission of the particular video stream. The QoS policies associated to the corresponding QoS metrics may be stored in a repository communicatively coupled to the optimization module that may be the same repository storing the QoE policies or a different repository.

In some examples, the optimization module may receive from the at least one video player, at least one of QoE media player metric, network Key Performance Indicator (KPI), Content Delivery Network (CDN) QoS metrics, user playback activity and pipeline logs to identify or forecast any operational issue that would impact on QoE metrics. The optimization module may use all these metrics to identify predicted and existing QoE issues. Examples of QoS metrics are instant bandwidth, latency and jitter.

In some examples, a collection module integrated in the end-user video player may collect the at least one QoE metric from the video player. Therefore, each video player may implement a collection module to collect QoE metrics related to the user's experience. As generally described herein, a collection module may refer to a combination of hardware and software logic implemented in the video players for collecting QoE metrics.

In some examples, the adjustments in operative parameters of the application layer may comprise changes in operative parameters. The tuned operative parameters are applied in rate control and real-time resource allocation/provisioning to communication protocols, infrastructure management systems and manifest documents related to multimedia services and technology providers. In those examples in which the optimization module also determines a set of adjustments in operative parameters relative to the network layer, said adjustments may comprise changes in operative parameters in packet forwarding methods, packet forwarding protocols and packet forwarding algorithms.

In some examples, the QoE metrics may be selected from a group comprising: Media Service QoE metrics, such as duration of artifacts, area of artefact, frames missed, objective Mean Opinion Score (MOS) metrics derived from average playback bitrate, number of quality switches per hour, number of freezes and their duration, playback time to start and video player buffer level; network KPls, such as throughput, latency or video streaming performance; user playback activity, such as video ID, local time, geoposition, IP address, area, city, region, country, play, pause, seek, fast reverse (FRW) or fast forward (FF); pipeline logs collecting technology context such as software and libraries versions, employed ISP and CDN, video streaming statistics such nominal compression bitrate, applied curve for per-title/scene encoding, segments duration or Peak Signal to Noise Ratio (PSNR), and any combination thereof.

In some examples, the optimization module may analyse the at least one QoE metric with respect to the corresponding at least one QoE policy in real-time. In this way, the optimization of the transmission of the streaming video content can be performed in real-time such that the identified and predicted QoE issues can be solved in real-time.

In some examples, the optimization module may receive the at least one QoE Noise Ratio (PSNR), and any combination thereof.

In some examples, the optimization module may analyse the at least one QoE metric with respect to the corresponding at least one QoE policy in real-time. In this way, the optimization of the transmission of the streaming video content can be performed in real-time such that the identified and predicted QoE issues can be solved in real-time.

In some examples, the optimization module may receive the at least one QoE metric together with metadata related to a location of the user using the video player.

In some examples, the optimization module may comprise a consolidation module to consolidate the at least one QoE metric receiving feedback from the video players associated to terminals consuming the video streaming contents. This consolidation module may derive, by applying some pre-defined algorithms, new derived metrics from the QoE metrics received from the end user video players. As used herein, a consolidation module may refer to a combination of hardware and software logic implemented in the optimization module for consolidating the gathered QoE metrics.

In some embodiments, the method may comprise sending, by the optimization module, to the participants of the video streaming content delivery pipeline the received at least one QoE metric such that the participants can declare new formulas and algorithms or can modify existing formulas and algorithms to derive new QoE metrics from the received QoE metrics; and the results of the analysis of the at least one QoE metric with respect to the associated at least one QoE policy such that the participants can load new QoE triggers and policies or modify existing QoE policies to be evaluated when receiving QoE metrics.

In another aspect of the invention, a non-transitory computer readable medium is described. This non-transitory computer readable medium may have instructions stored thereon that, in response to execution by one or more processors, cause the one or more processors to perform operations in accordance with the method previously disclosed.

Therefore, the non-transitory computer readable medium may have instructions to receive, at an optimization module and from at least one video player communicatively coupled to the optimization module, at least one QoE metric related to a particular video stream, the particular video stream being transmitted from the video hosting server to the video player. The non-transitory computer readable medium may have further instructions to cause the optimization module to analyze the at least one QoE metric with respect to at least one QoE policy associated to the at least one QoE to optimize the transmission of the particular video stream. The non-transitory computer readable medium may have further instructions to cause the optimization module to determine adjustments in operative parameters of an application layer in the transmission of the particular video stream based on the analysis and to send said adjustments to corresponding participants on the video streaming content delivery pipeline controlling the application layer in the transmission of the particular video stream, the participants being video content providers, video content publishers, video content distributors, video content service providers, video encoding/streaming technology providers and media player's Internet Service Providers. Then, the non-transitory computer readable medium may have instructions to cause the optimization module to apply the adjustments in the application layer across the participants of the video streaming content delivery pipeline.

In another aspect of the invention, an optimization module for optimizing transmission of streaming video contents based on Quality of Experience (QoE) metrics is described. The streaming video contents may be transmitted from a video hosting server to a video player on a terminal over a network connection. The optimization module comprises a processor communicatively coupled to at least one video player; and a memory storing instructions. These instructions, when executed, may cause the processor to receive at least one QoE metric related to a particular video stream from the at least one video player, the particular video stream being transmitted from the video hosting server to the video player, and to analyse the at least one QoE metric with respect to at least one QoE policy to perform the optimization of the particular video stream. These instructions may further cause the processor to determine adjustments in operative parameters of an application layer in the transmission of the particular video stream based on the analysis, send the adjustments to corresponding participants on the video streaming content delivery pipeline controlling the application layer in the transmission of the particular video stream, the participants being video content providers, video content publishers, video content distributors, video content service providers, video encoding/streaming technology providers and media player's Internet Service Providers and cause the adjustments to be applied in the application layer across the participants of the video streaming content delivery pipeline.

In some examples, every time that the video player requests to the video hosting server a new video segment, that may range from 2 to 30 seconds of video content, the QoE metrics associated to that particular video segment are received at the processor.

In some examples, the optimization module may comprise an event generator module configured to generate at least one event when the at least one QoE metric does not meet the corresponding at least one QoE policy. The optimization module may further comprise a policy module configured to analyse the event with respect to thresholds defined in the at least one QoE policy and to generate, when the event does not meet the thresholds, one of an alarm to notify the adjustments to a particular participant on the video streaming content delivery pipeline. The optimization module, to optimize the transmission of video streams, may send the alarm to notify to the corresponding present apparatus, systems, and methods may be practiced without these specific details. Reference in the specification to "an example" or similar language means that a particular feature, structure, or characteristic described in connection with that example is included as described, but may not be included in other examples.

### BRIEF DESCRIPTION OF THE DRAWINGS

The following detailed description references the drawings, wherein:
FIG. 1 is a flowchart of an example method for optimizing transmissions of streaming video contents based on QoE metrics.
FIG. 2 shows a flowchart of another example method for optimizing transmissions of streaming video contents based on QoE metrics, with the with the optimization module generating alarms and actions.
FIG. 3 is a block diagram of an example optimization module for streaming video content transmission optimization based on QoE metrics.
FIG. 4 is a block diagram of another example optimization module for streaming video content transmission optimization based on QoE metrics, including a dashboard module and a binding module.

### DETAILED DESCRIPTION OF THE DISCLOSURE

In various exemplary embodiments, the present disclosure refers to systems and methods for optimizing transmission of streaming video contents based on Quality-of-Experience (QoE) metrics received from end-user video players. The optimization allows the automated adjustment of operative parameters of the application layer of the transmission of the streaming video contents by notifying to the corresponding participant of the streaming video content delivery pipeline of the needed adjustments or by performing said adjustments in the application layer. The participants controlling the application layer may generally be CDN providers, cloud infrastructure providers, multimedia service managers or technology providers such as encoding service providers, data package service providers, streaming service providers, media player's ISPs, and the like.

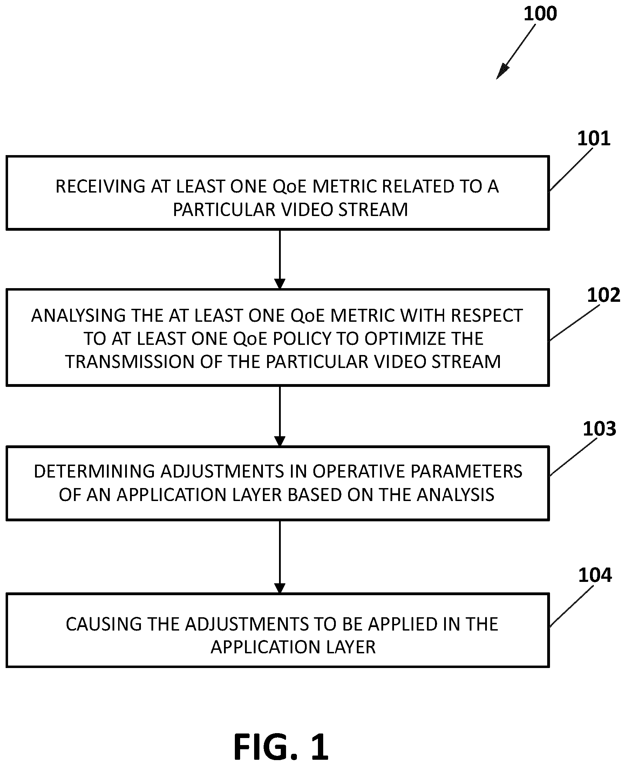

Referring now to the figures, FIG. 1 shows a flowchart of an example method 100 for optimizing transmissions of streaming video contents based on QoE metrics. The streaming video contents may be generally transmitted from a video hosting server to a video player on a terminal, for example a mobile device, a laptop computer, a desktop computer, workstation, tablet computer, smart device, etc., over a network connection, e.g., an Internet connection.

At step 101 of the method 100, at least one QoE metric associated to a particular video stream is received at an optimization module. For example, a media player would capture duration of buffering states, number quality switches and average bitrate for a specific video content. Then the media player measures an objective MOS for the video streaming session each time a video segment is downloaded from the video hosting server along a playback session. Each new value of the QOE metrics associated to the different video segments is sent to the optimization module, as declared in step 101, by means of a Kafka bus, where the topic of the Kafka bus separates the different media services. A single Kafka bus creates different data channels, called topics, where media players can push data and value-chain participants can subscribe to. Each Kafka topic means a unique identifier to separate concurrent data and metrics flows, coming from media players, for different media services. Thus, the value-chain participants can isolate the data and metrics for a particular media service. In any case, the QoE metrics are received at the optimization module and from at least one video player communicatively coupled to the optimization module, at least one QoE metric related to a particular video stream. The at least one QoE metric may be, for example, any of network KPIs, CDN QoS metrics, video streaming performance metrics, Service Quality metrics, user activity metrics, technology logs or pipeline logs.

At step 102 of the method 100, the optimization module analyses the received QoE metric with respect to at least one QoE policy associated to the at least one QoE to perform the optimization of the transmission of the particular video stream. In some examples, there may be one QoE policy associated to the received QoE metric, while in some other examples there may be a plurality of QoE policies associated to the received QoE metric. Based on this analysis, the optimization module determines the existence of a default QoE issue, a current QoE issue that the user is experiencing or a predicted QoE issue that the user is going to experience. In the example, considering that most MOS metrics ranges from 0 to 5, a value under 2 (that may be configured by the media service provider according to its business model in the corresponding QoE policy) could be unsatisfactory for a specific media service provider when evaluated at step 102.

At step 103 of the method 100, the optimization module determines a set of adjustments relative to operative parameters of an application layer in the transmission of the particular streaming video content based on the analysis performed. These adjustments are to overcome the default, current or predicted QoE issue. In the example, as the minimum permitted value of MOS is violated, the optimization module translates the policy action into specific application layer adjustments to mitigate or prevent from any QoE issue from different participants on the video streaming content delivery pipeline. Thus, the optimization module would decide that the media service provider needs to crop specific bitrates from the manifest documents in step 103, if the employed manifest document has not been cropped yet.

At step 104 of the method 100, the optimization module causes these adjustments to be applied in the application layer. The adjustments in the application layer may refer to adjustments in operative parameters of the communications methods, interface protocols and transmission algorithms. In the example and at step 104, some operative parameters of the application layer that is controlled by the corresponding participants on the video streaming content delivery pipeline are adjusted. Thus, the media service provider would start sending a cropped manifest document. This cropped manifest would limit the higher bitrate available to media players. This limitation on bitrates reduces the eager behaviour of some media players trying to select a high-quality bitrate that would reduce the available bandwidth for the rest of media players, alleviating the competition across media players when sharing a congested path.

The optimization module may analyse the at least one QoE metric with respect to the corresponding QoE policy in order to optimize the transmission of different video streams affected by similar default QoE issues, identified QoE issues or predicted QoE issues. This may provide a detailed and granular view of the video streams on which to apply general policies that may include groups of users about whom QoE related issues are identified or predicted.

The adjustments relative to operative parameters of an application layer in the transmission of the particular streaming video content based on the analysis performed are notified to the corresponding participants on the video streaming content delivery pipeline controlling the application layer. In addition, the QoE metrics, as received from the video players or after being processed to generate new derived QoE metrics, may be sent to these participants so they could use them with statistical, management or control purposes.

Besides, the participants on the video streaming content delivery pipeline, e.g. the media service providers, can also declare new formulas and algorithms or modify existing formulas and algorithms to derive new QoE metrics from the captured QoE metrics. Some examples of QoE metrics derived from captured metrics are: summaries based on closed geo-position, fairness across a set of media players simultaneously consuming a media service from the standard deviation of the average QoE, effectiveness of an area with the mean of the average QoE of media players simultaneously consuming a media service from a specific area, steadiness/smoothness, with the mean of the standard deviation of the QoE for each media player, among others.

Furthermore, these participants on the video streaming content delivery pipeline can load new QoE policies or modify existing QoE policies to be implemented to the real-time captured QoE metrics and the historical records which will cause the generation of new events. For example, based on the results of the analysis received from the optimization module, the participants on the video streaming content delivery pipeline, e.g. the media service providers or the CDN providers among others, may modify the thresholds defined in a particular QoE policy to generate different events, alarms or actions in response to default QoE issues, identified QoE issues or predicted QoE issues.

Some of these participants may be media service providers, CDN providers, video player providers or video technology providers such as video encoding, packaging and streaming providers.

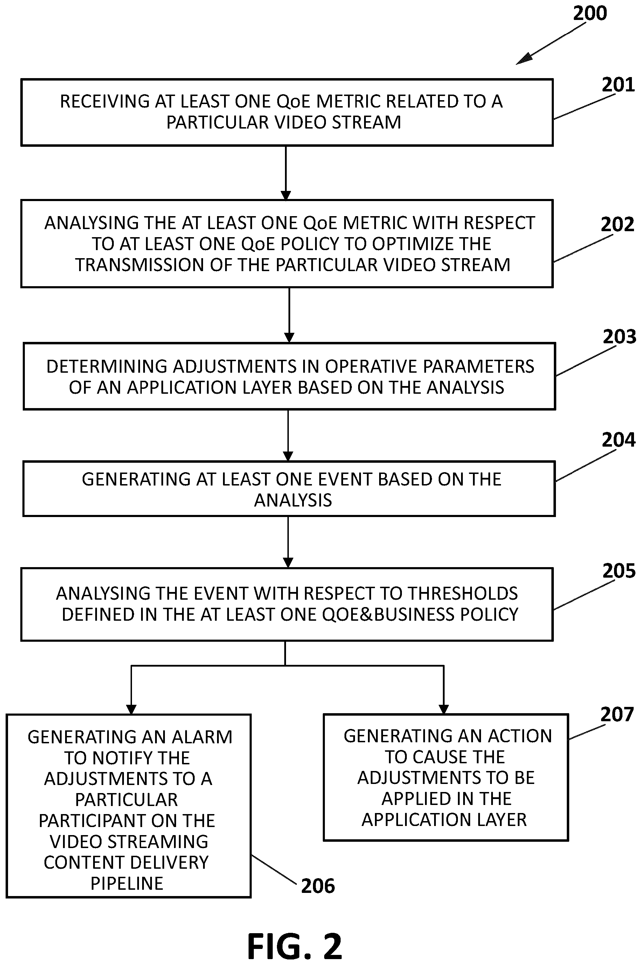

FIG. 2 shows a flowchart of another example method 200 for optimizing transmissions of streaming video contents based on QoE metrics, with the optimization module generating alarms and actions.

At step 201 of the method 200, at least one QoE metric associated to a particular video stream is received. For example, a media player would capture duration of buffering states, number quality switches and average bitrate for a specific content. Then the media player measures an objective MOS for the video streaming session each time a video segment is downloaded from the video hosting server along a playback session. Each new value of the QOE metrics associated to the different video segments is sent to the optimization module, as declared in the step 201, by means of a Kafka bus, where the topic separate different media services. In any case, the QoE metrics are received at an optimization module and from at least one video player communicatively coupled to the optimization module, at least one QoE metric related to a particular video stream.

At step 202 of the method 200, the optimization module analyses the received QoE metric with respect to at least one QoE policy associated to the at least one QoE to perform the optimization of the transmission of the particular video stream. Based on this analysis, the optimization module determines the existence of a default QoE issue, a current QoE issue that the user is experiencing or a predicted QoE issue that the user is going to experience. In the example, considering that most MOS metrics ranges from 0 to 5, a value under 2 (configured in the QoE policy by the media service provider according to its business model, also referred to as QoE&Business policy) could be unsatisfactory for a specific media service provider when evaluated at step 202.

At step 203 of the method 200, the optimization module determines a set of adjustments relative to operative parameters of an application layer in the transmission of the particular streaming video content based on the analysis performed. These adjustments are to overcome the default, current or predicted QoE issue. In the example, as the minimum permitted value of MOS is violated, the optimization module at step 203 translates the policy action into specific application layer and application network adjustments to mitigate or prevent from any QoE damage from different application layer and network layer corners. Thus, the optimization module determines that the adjustments are to crop specific bitrates from the manifest document, if it has not been cropped yet.

In some examples one default QoE issue, identified QoE issue or predicted QoE issue may cause the generation of adjustments in one single layer of the network while in some other examples, adjustments in several layers, such as the application layer and the network layer, may be generated. Besides, one default QoE issue, identified QoE issue or predicted QoE issue may cause adjustments to be performed in the network by one participant on the video streaming content delivery pipeline or by several of these participants.

At step 204 of the method 200, the optimization module, and more particularly an event generator module of the optimization module, generates at least one event based on the analysis performed. For example, the optimization module may generate events related to default QoE issues, identified QoE issues or predicted QoE issues, based on the QoE metrics received and analysed. In the example, different events are generated at step 204 for participants on the video streaming content delivery pipeline controlling the application layer and the network layer to be informed. Thus, the event generator module, at step 204, creates an event for the media service provider (controlling the application layer) specifying the specific bitrates to be cropped from the manifest, if the employed manifest has not been cropped yet. Moreover, the event generator module creates another event for the video technology provider (also controlling the application layer) to enlarge the buffering time of the media player. Furthermore, the event generator module creates another event to report to the CDN vendor (controlling the network layer) an underperforming QoE issue in a specific area. Finally, the event generator module creates another event to inform to the employed ISP (controlling the network layer) that the IP address of the media player is suffering connectivity issues.

At step 205 of the method 200, the participants on the video streaming content delivery pipeline receiving the events analyse the event generated with respect to thresholds defined in the at least one QoE&Business policy. This policy combines end-user satisfaction with the available resources (CAPEX,OPEX.) from the assets inventory and viable operational business range perspective to balance the cost-efficiency trade-off. For example, the optimization module may evaluate the generated events to determine whether any thresholds have been violated. In the example, event severity is weighted with dedicated resources and normalized by business thresholds defined tin the QoE&Business policy. Thus, the media service provider by defining/declaring/stating a specific QoE&Business policy would program a decision taker to decide if the remaining bitrate representations, after cropping the manifest would satisfy a minimum quality available for the clients of the media service, independently of the QoE delivered. The video technology provider, by defining a specific QoE&Business policy, would program a decision taker to decide if the buffering time can be extended, to minimize freezes and quality switches, or the resulting time to start would be unacceptable pushing the user to leave the media service. The CDN vendor, by defining a specific QoE&Business policy, would program a decision taker to check if there is a problem with a specific area, when comparing to the QoS level from other users in the same area using the same proxies. In the case, the identified issue is consistent with other users in an area, the CDN would check if the Service Level Agreement (SLA) contracted by the media service is violated, if the allocation of extra available assets would be included in the subscription/pricing plan, and the agreed penalty if the SLA is not provided. In the case of the ISP, it would program a decision taker to check if no critical traffic is crossing the same path, and the impact on the OPEX for scaling up a section of the network topology. Thus, step 205 of the method 200 will register any violation and decision taken including OPEX/CAPEX parameters for audit or forensics purposes.

At step 206 of the method 200, the optimization module, more particularly the policy module and when the event generated does not meet the thresholds, generates an alarm to notify the adjustments to a particular participant on the video streaming content delivery pipeline controlling the application layer so that the notified participant may take the need further steps to cause the adjustments to be applied in the application layer. In the example, different participants on the video streaming content delivery pipeline receiving the even controlling the network layer are notified/triggered to apply a specific operative parameter or action. In the following examples, as the involved participants in the video streaming content delivery pipeline are independent entities, their systems are just informed/notified. The CDN vendor (network layer) would receive an alarm generated in step 206 to deploy extra resources to satisfy the SLA. Then, the media service would update the manifest document to point to the new CDN endpoint. Moreover, the ISP (network layer) will receive an alarm generated in step 206 to update or tune the network slice for media traffic or to scale up some part of the network by means of the Virtualized Infrastructure Manager (VIM).

Alternatively, at step 207 of the method 200, the optimization module, more particularly the policy module, generates an action to cause, by means of specific APIs, the adjustments to be directly and automatically applied in the application layer. The adjustments in the application layer may refer to adjustments in operative parameters of the communications methods, interface protocols and transmission algorithms. In the example, different network level participants on the video streaming content delivery pipeline receiving the even controlling the application layer are notified/triggered to apply a specific operative parameter or action. In the following examples, as the involved participants in the video streaming content delivery pipeline provide modules tailored and integrated to the media service providers, their systems are directly and automatically modified by the applied action. Thus, an action would be generated to apply the delivery of the cropped manifest from the media service provider (application layer) in step 207. This cropped manifest would limit the higher bitrate available to avoid some media players selecting a high-quality bitrate that would reduce the available free resources for the rest, reducing competition across media players sharing a congested path. Furthermore, the media player operated by the video technology provider (application layer) would receive an action generated in step 207 to enlarge the buffering time to minimize freezes and quality switches but setting the latency higher.

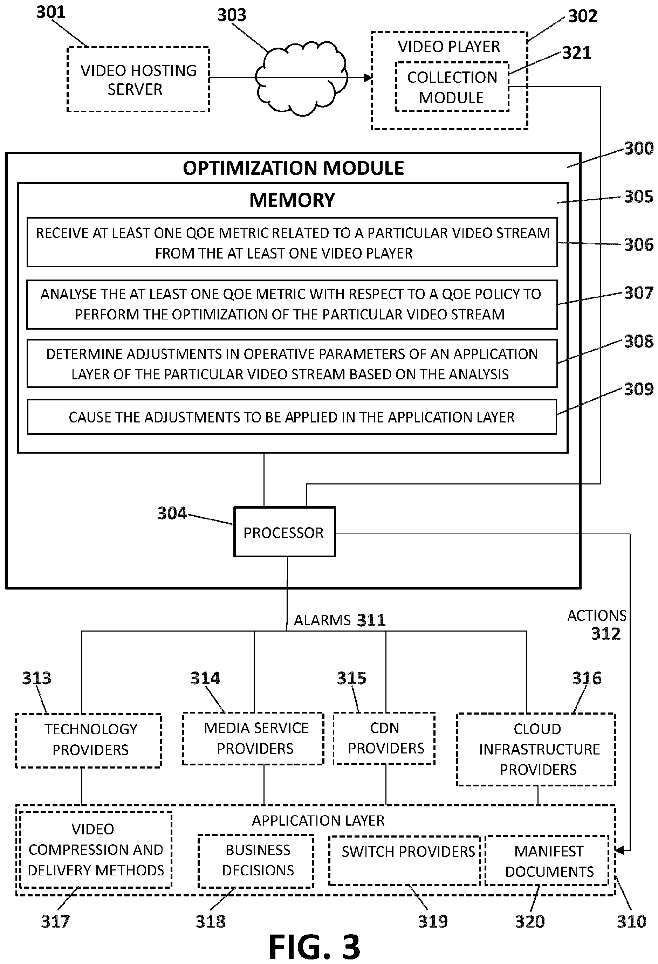

FIG. 3 shows a block diagram of an example optimization module 300 for streaming video content transmission optimization based on QoE metrics. The streaming video contents are transmitted from a video hosting 301 server to a video player 302 on a terminal (not shown in the figure) over a network connection 303. It should be understood that the optimization module 300 depicted in FIG. 2 may include additional components and that some of the components described herein may be removed and/or modified without departing from a scope of the optimization module 300.

The optimization module 300 comprises a processor 304 communicatively coupled to the video player 302 and a memory 305 storing instructions that, when executed, cause the processor to receive 306 QoE metrics related to a particular video stream from the video player 302, analyse 307 the QoE metric with respect to a QoE policy associated to the QoE metric to perform the optimization of the particular video stream, determine 308 adjustments in operative parameters of an application layer 310 in the transmission of the particular video stream based on the analysis and cause 309 the adjustments to be applied in the application layer 310.

The processor 304 may be a Central Processing Unit (CPU), microprocessor or any other suitable hardware or software processing device. The optimization module 302 may further comprise a memory controller (not shown in the figure) for interfacing with memory 305. The memory 305 may be any of Random-Access Memory (RAM), volatile memory, non-volatile memory, flash memory, a storage drive (e.g., a hard drive), a solid-state drive, any type of storage disc (e.g., a compact disc, a DVD, etc.), and the like, or a combination thereof. Further, the memory 305 described herein may be non-transitory.

In order to cause 309 the adjustments to be applied in the application layer 310, the processor 304 of the optimization module 300 may generate alarms 311 to notify the adjustments to the corresponding participants on the video streaming content delivery pipeline, such as the technology providers 313, the media service providers 314, the CDN providers 315 or the Cloud infrastructure providers 316, among others, that control the application layer 310. Alternatively, the processor 304 of the optimization module 300 may generate actions 312 to cause the adjustments to be applied in the application layer 310.

In both cases, whether the processor 304 generates the alarms 311 or the actions 312, the appropriate changes on the application layer 310 to resolve the predicted (or currently active) QoE issues are performed. For example, these changes may be performed on the video compression and delivery methods 317, the business decisions 318, the switch providers 319 or the manifest documents 320, among others, of the application layer 310.

The QoE metrics are captured by a collection module 321 implemented into the video player. This collection module 321 may further capture network metrics, Content Delivery Network (CDN) Quality-of-Service (QoS) metrics and user playout metrics in order to identify existing QoE issues or predicted QoE issues.

For example, the manager of a particular Media Service provider, e.g. Netflix, can visualize real-time status or records of data based on the captured QoE metrics and the derived QoE metrics as time series. In this way, these media service providers can identify most consumed contents and times, supervise user playback activity and quality of service of technology providers and key performance indicators from telco operators. Based on these real time-status and records, the media service providers apply any filter and threshold to any dataset dimension to perform forensics analysis of evident or intricate situations regarding the QoE experienced by a user or a group of users. The media service providers can also use all this data to compare current providers with past alternative providers in terms of performance and costs. The media service providers can also load new QoE policies or modify existing QoE policies and modify the historical records which will cause the generation of new events.

The media service providers may implement specific APIs to perform the adjustments in the application layer when agreed issues related to QoE are identified or predicted.

In some examples, the CDN providers, e.g. Akamai or Level3, can visualize real-time status or records of data based on the captured QoE metrics and the derived QoE metrics as time series. The CDN providers can also declare formulas to derive new parameters from the captured metrics. Moreover, the CDN provider's system or platform can subscribe to an alarm channel to get awareness of identified QoE issues or predicted QoE issues in real-time. The CDN providers can declare new formulas and algorithms or modify existing formulas and algorithms to derive new QoE metrics from the captured QoE metrics. They can also load new QoE policies or modify existing QoE policies and modify the historical records which will cause the generation of new events. When external processing infrastructure is employed the CDN providers can export data summaries based on the QoE metrics in real-time.

The CDN providers may implement specific APIs to perform the adjustments in the application layer when agreed issues related to QoE are identified or predicted.

In some examples, the video player providers can visualize records of data based on the captured QoE metrics and the derived QoE metrics as time series. Moreover, video player providers may have access to an alarm historical record to get awareness of identified QoE issues or predicted QoE issues raised to foster forensics and debug to improve the Video Player technology.

The video player providers, e.g. Bitmovin, may implement specific APIs to perform the adjustments in the application layer when agreed issues related to QoE are identified or predicted.

In some examples, the video technology providers, such as the video encoding, packaging and streaming providers, can visualize real-time status or records of data based on the captured QoE metrics and the derived QoE metrics as time series. Video technology providers can also declare formulas to derive new parameters from the captured metrics. The video technology providers can declare new formulas and algorithms or modify existing formulas and algorithms to derive new QoE metrics from the captured QoE metrics. They can also load new QoE policies or modify existing QoE policies and modify the historical records which will cause the generation of new events.

Moreover, video technology providers have access to an Alarm historical record to get awareness of identified QoE issues or predicted QoE issues raised to foster forensics and debug to improve the Video Encoding and Packaging technology.

Video technology providers can subscribe to an Alarm channel to get awareness of issues or potential QoE related issues in real-time. When external processing infrastructure is employed the video technology providers can export data summaries in real-time.

The video technology providers may implement specific APIs to perform the adjustments in the application layer when agreed issues related to QoE are identified or predicted.

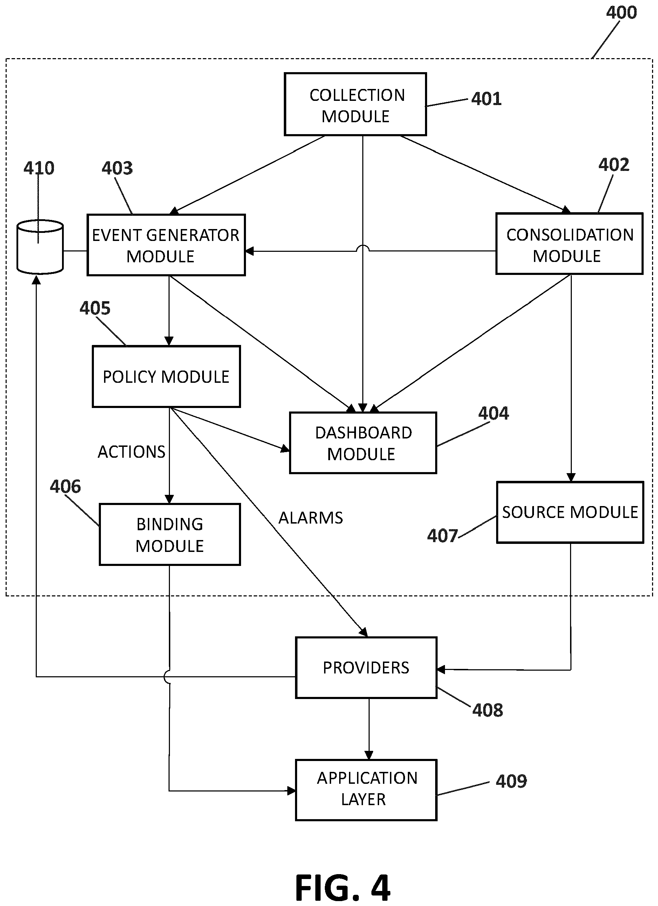

FIG. 4 is a block diagram of another example optimization module 400 for streaming video content transmission optimization based on QoE metrics, the optimization module including a dashboard module 404 and a binding module 406. It should be understood that the optimization module 400 depicted in FIG. 3 may include additional components and that some of the components described herein may be removed and/or modified without departing from a scope of the optimization module 300.

The optimization module 400 comprises a collection module 301 that will be implemented into an end-user video player (not shown in this figure). The collection module 401 implements a combination of hardware and software logic for collecting end user metrics, such as QoE metrics, and context video streaming statistics, playback events and employed technology solutions grouped around the geo-position of the media players producing the data collected. The data rate at which the collection module 401 captures data is automatically adjusted to avoid any interruption or quality loss in the streaming video experience. The collection module 401 also considers the streaming protocol and setup being used in the transmission.

The optimization module 400 also comprises a consolidation module 402 that receives the captured end user metrics, e.g. the end-user QoE metrics, from the collection module 401. The consolidation module 402 normalizes, compiles, compares and correlates the real-time end user QoE metrics and assesses, for example, the end-user QoE metrics according to a default or customized formulas or algorithms. This formulas or algorithms may be stored in a repository (not shown in this figure) communicatively coupled to the consolidation module 402. The consolidation module 402 implements a combination of hardware and software logic for normalizing, compiling, comparing and correlating the real-time end user metrics.

The optimization module 400 also comprises an event generator module 403 that analyses data and metrics received from the collection module 401 and the consolidation module 402. The event generator module 403 generates events based on the analysis performed. The analysis determines existing QoE issues, e.g., the user is experiencing image interruptions or the quality of the image received is too low, or predicts QoE issues, e.g., the image bit rate is lowering such that the user is going to experience image problems shortly, based on the captured QoE metrics and the derived QoE metrics. The event generator module 403 implements a combination of hardware and software logic for analysing data and metrics and for generating events based on the analysis.

The optimization module 400 also comprises a dashboard module 404 that receives data and metrics from the collection module 401 and the consolidation module 402 and events from the event generator module 403. The dashboard module generates configurable graphs, plots, reports and summaries in real-time of captured and derived metrics. This module 404 enables providers 408 to visually process the QoE and the QoS status. These plots can be configured for a specific video content, for a geo-area, time, day, human life-cycles, weekends, blank holidays, inter-periods, provider, telco operator and any parameter stored or derived These plots would support manual/human decision making. Thresholds can be defined to focus on specific conditions, hiding the samples that do not satisfy them. The dashboard module 404 implements a combination of hardware and software logic for generating the visual representation of the captured and derived metrics.

The optimization module 400 also comprises a policy module 405 that receives the events from the event generator module 403. The policy module 405 evaluates the fired events to determine if any thresholds in the QoE policy have been violated and execute the appropriate actuation to resolve the predicted (or currently active) issue. Events are automatically processed by the policy module 405, the declared Conditions in the QoE policy are checked and when violated, alarms or actions are issued. The alarms are sent to the providers 408, for example CDN providers, cloud infrastructure providers, multimedia service managers or technology providers such as cloud infrastructure providers, encoding service providers, data package service providers, streaming service providers, and the like, controlling the application layer 409, such that the notified provider 408 may take the need further steps to cause the adjustments to be applied in the application layer 409. Alternatively, the policy module 405 may issue an action to cause the adjustments to be applied in the application layer. The policy module 405 implements a combination of hardware and software logic for evaluating the events and generating the alarms and actions.

The optimization module 400 also comprises a binding module 406 that receives the actions from the policy module 405. The binding module 406 implements a combination of hardware and software logic for automatically applying the actions on the application layer when a stated event is fired and the declared conditions are satisfied.

The optimization module 400 also comprises a source module 407 that receives the captures QoE metrics and the consolidated QoE metrics from the consolidation module 402. The source module 406 produces data streams to allow third infrastructures and technology providers 408 to get awareness of the optimization module feedback. This data stream is protected by a different license tokens and the communication is encrypted.
The providers 408, based on the optimization module feedback that receive, can generate new QoE can load new QoE policies or modify existing QoE policies in the repository 410 to be implemented to the real-time captured QoE metrics and the historical records which will cause the generation of new events. Thus, the QoE policies used for the analysis of the QoE metrics can be implemented with the default parameters or with the values that are configured by the providers. The QoE policies and he thresholds defined in the QoE policies will define the importance of the existing or predicted QoE issue and the action to be carried out according to parameters dynamically configured by the providers 408 in the policies. Furthermore, the Policies can be defined and updated by the providers 408 employing a standard SUPA ECA document.

The optimization modules and methods as described herein may be useful for infrastructure and technology providers to apply actions in real-time to ensure the performance of the video delivery chain while reducing the operational costs. The optimization modules and methods are not limited to the optimization of video streaming sessions for a specific system, but it includes different data views and configured functions to trigger in real-time alarms and actions to different interdependent technologies and infrastructures. It further allows to register any temporal or persistent violation of the contracted quality of service from an infrastructure or technology provider and fire the programmed alarm or action to a third-party system. The optimization modules and methods are also able to infer QoE results from QoS trends to generate events to prevent from any potential service outage or degradation. It also allows to derive new parameters and apply algorithms to fire events about detected issues and correlations, and identified potential degradations. New functions to derive parameters, assessed from the current values and the historic records, can be defined using: SQL syntax to create time series and data matrix from selected data; and Octave syntax for mathematical operations. The optimization module ships some prediction methods such as online K-Means classifiers, ARIMA/ARIMAX regressors and Simulated Annealing optimizers. The optimization modules and methods also turn these events into alarms and actions, to apply, operational and cost optimizations.

## Claims

1. A computer implemented method (100) for optimizing transmission of streaming video contents based on user Quality-of-Experience, QoE, metrics, the streaming video contents being transmitted from a video hosting server to a video player on a terminal over a network connection, the method comprises
receiving (101,201), at an optimization module and from at least one video player communicatively coupled to the optimization module, at least one QoE metric related to a particular video stream;
analysing (102,202), by the optimization module, the at least one QoE metric with respect to at least one QoE policy associated to the at least one QoE to optimize the transmission of the particular video stream; **characterised in that** the method further comprises:
determining (103,203), by the optimization module, adjustments in operative parameters of an application layer between the video hosting server and the video player in the transmission of the particular video stream based on the analysis;
notifying the adjustments to corresponding participants on the video streaming content delivery pipeline controlling the application layer in the transmission of the particular video stream, the participants being video content providers, video content publishers, video content distributors, video content service providers, video encoding/streaming technology providers or media player's Internet Service Providers; and
causing (104), by the optimization module, the adjustments to be applied in the application layer across the participants on the video streaming content delivery pipeline.

2. The method (200) according to claim 1, further comprising:
generating (204), by the optimization module, at least one event based on the analysis;
analysing (205), by the optimization module, the event with respect to thresholds defined in the at least one QoE policy; and
generating, by the optimization module and when the event does not meet the thresholds, one of an alarm (206) to notify the adjustments to a particular participant on the video streaming content delivery pipeline controlling the application layer and an action (207) to cause the adjustments to be applied in the application layer.

3. The method (100) according to any preceding claim, comprising:
receiving, at the optimization module and from at least one media server, at least one Quality-Of-Service, QoS, metric related to the particular video stream; and
analysing, by the optimization module, the at least one QoE metric with respect to the corresponding at least one QoE policy and the at least one QoS metric with respect to at least one QoS policy to perform the optimization of the particular video stream.

4. The method (100) according to any preceding claim, comprising receiving, at the optimization module and from the at least one video player, at least one of network metrics, Content Delivery Network, CDN, Quality-of-Service, QoS, metrics and user playout metrics.

5. The method (100) according to any preceding claim, wherein the optimization module further determines adjustments relative to operative parameters of a network layer in the transmission of the particular video stream based on the analysis and causes them to be applied in the network layer, wherein the adjustments in operative parameters of the network layer comprise changes to operative parameters in packet forwarding protocols and the adjustments in operative parameters of the application layer comprise changes to operative parameters in rate control and resource provisioning applied in real-time to communication protocols, infrastructure management systems and manifest documents related to multimedia services and technology providers.

6. The method (100) according to any preceding claim, wherein the QoE metrics are selected from a group comprising network Key Performance indicators, KPIs, Service Quality metrics, user activity metrics, technology logs, pipeline logs and any combination thereof.

7. The method (100) according to any preceding claim, comprising analysing the at least one QoE metric with respect to at least one QoE policy in real-time.

8. The method (100) according to any preceding claim, wherein receiving the at least one QoE metric further comprises receiving metadata related to a location of a user using the video player.

9. The method (100) according to any preceding claim, comprising:
determining, by the optimization module, adjustments in operative parameters of a network layer in the transmission of the particular video stream based on the analysis;
generating, by the optimization module, at least one event based on the analysis;
analysing, by the optimization module, the event with respect to thresholds defined in the at least one QoE policy; and
generating, by the optimization module and when the event does not meet the thresholds, one of an alarm to notify the adjustments to a particular participant on the video streaming content delivery pipeline controlling the network layer and an action to cause the adjustments to be applied in the network layer.

10. The method (100) according to any one of the preceding claims, comprising sending to the participants of the video streaming content delivery pipeline:
the received at least one QoE metric such that the participants declare new formulas and algorithms or modify existing formulas and algorithms to derive new QoE metrics from the received QoE metrics; and
the results of the analysis of the at least one QoE metric with respect to the associated at least one QoE policy such that the participants load new QoE policies or modify existing QoE policies to be evaluated when receiving QoE metrics.

11. A non-transitory computer readable medium having instructions stored thereon that, in response to execution by one or more processors, cause the one or more processors to perform operations in accordance with the method of any one of claims 1-10.

12. An optimization module (300) for streaming video content transmission optimization based on Quality of Experience, QoE, metrics, the streaming video contents being transmitted from a video hosting server (301) to a video player (302) on a terminal over a network connection (303), **characterized in that** the optimization module (300) comprises:
a processor (304) communicatively coupled to at least one video player; and
a memory (305) storing instructions that, when executed, cause the processor (304) to:
receive (306) at least one QoE metric related to a particular video stream from the at least one video player, the particular video stream being transmitted from the video hosting server to the video player;
analyse (307) the at least one QoE metric with respect to at least one QoE policy to perform the optimization of the particular video stream;
determine (308) adjustments in operative parameters of an application layer in the transmission of the particular video stream based on the analysis;
notify the adjustments to corresponding participants on the video streaming content delivery pipeline controlling the application layer in the transmission of the particular video stream, the participants being video content providers, video content publishers, video content distributors, video content service providers, video encoding/streaming technology providers or media player's Internet Service Providers; and
cause (309) the adjustments to be applied in the application layer across the participants on the video streaming content delivery pipeline.

13. The optimization module (300,400) according to claim 12, comprising
an event generator module (403) configured to generate at least one event when the at least one QoE metric does not meet the corresponding at least one QoE policy; and
a policy module (405) configured to analyse the event with respect to thresholds defined in the at least one QoE policy and to generate, when the event does not meet the thresholds, one of an alarm to notify the adjustments to a particular participant on the video streaming content delivery pipeline controlling the application layer (409) and an action to cause the adjustments to be applied in the application layer (409).

14. The optimization module (300,400) according to claim 13, wherein the processor (304) is configured to determine adjustments in operative parameters of a network layer in the transmission of the particular video stream based on the analysis, and the policy module (405) is configured to generate, when the event does not meet the thresholds, one of an alarm to notify the adjustments to a particular participant on the video streaming content delivery pipeline controlling the network layer and an action to cause the adjustments to be applied in the network layer.

15. The optimization module (300,400) according to any preceding claim 12-14, comprising a collection module (401) implemented in each video player communicatively coupled to the processor (304), the collection module (401) being configured to collect the at least one QoE metric from the corresponding video player.

## Patentansprüche

1. Ein computerimplementiertes Verfahren (100) zur Optimierung der Übertragung von Streaming-Video-Inhalten auf der Grundlage von Benutzer-QoE-Metriken, Quality of Experience, wobei die Streaming-Video-Inhalte von einem Video-Hosting-Server über eine Netzwerkverbindung an einen Video-Player auf einem Endgerät übertragen werden, das Verfahren umfasst:
Empfangen (101, 201), an einem Optimierungsmodul und von mindestens einem Video-Player, der kommunikativ mit dem Optimierungsmodul gekoppelt ist, mindestens einer QoE-Metrik, die einen bestimmten Video-Stream betrifft;
Analysieren (102, 202), durch das Optimierungsmodul, der mindestens einen QoE-Metrik in Bezug auf mindestens eine QoE-Richtlinie, die mit der mindestens einen QoE verknüpft ist, um die Übertragung des bestimmten Video-Streams zu optimieren; **dadurch gekennzeichnet, dass** das Verfahren ferner umfasst:
Bestimmen (103, 203), durch das Optimierungsmodul, von Anpassungen in operativen Parametern einer Anwendungsschicht zwischen dem Video-Hosting-Server und dem Video-Player bei der Übertragung des bestimmten Video-Streams basierend auf der Analyse;
Mitteilen der Anpassungen an entsprechende Teilnehmer an der Video-Streaming-Inhalts-Bereitstellungs-Pipeline, die die Anwendungsschicht bei der Übertragung des bestimmten Video-Streams steuert, wobei die Teilnehmer Video-Inhalts-Anbieter, Video-Inhalts-Herausgeber, Video-Inhalts-Distributoren, Video-Inhalts-Service-Anbieter, Video-Codier/Streaming-Technologie-Anbieter oder Internet-Service-Anbieter eines Media-Players sind; und
Veranlassen (104), durch das Optimierungsmodul, dass die Anpassungen in der Anwendungsschicht über die Teilnehmer auf der Video-Streaming-Inhalts-Bereitstellungs-Pipeline angewendet werden sollen.

2. Das Verfahren (200) gemäß Anspruch 1, ferner umfassend:
Erzeugen (204), durch das Optimierungsmodul, mindestens eines Ereignisses basierend auf der Analyse;
Analysieren (205), durch das Optimierungsmodul, des Ereignisses in Bezug auf Schwellenwerte, die in der mindestens einen QoE-Richtlinie definiert sind; und
Erzeugen, durch das Optimierungsmodul und wenn das Ereignis die Schwellenwerte nicht erfüllt, eines Alarms (206), um die Anpassungen einem bestimmten Teilnehmer auf der Video-Streaming-Inhalts-Bereitstellungs-Pipeline, die die Anwendungsschicht steuert, mitzuteilen, oder einer Aktion (207), um zu bewirken, dass die Anpassungen in der Anwendungsschicht angewendet werden.

3. Das Verfahren (100) gemäß einem der vorhergehenden Ansprüche umfassend: Empfangen, an dem Optimierungsmodul und von mindestens einem Medienserver, mindestens einer QoS-Metrik, Quality-Of-Service, die den bestimmten Video-Stream betrifft; und
Analysieren, durch das Optimierungsmodul, der mindestens einen QoE-Metrik in Bezug auf die entsprechende mindestens eine QoE-Richtlinie und der mindestens einen QoS-Metrik in Bezug auf mindestens eine QoS-Richtlinie, um die Optimierung des bestimmten Video-Streams durchzuführen.

4. Das Verfahren (100) gemäß einem der vorhergehenden Ansprüche, umfassend Empfangen, an dem Optimierungsmodul und von dem mindestens einen Video-Player, mindestens eines aus Netzwerkmetriken, Inhalts-Bereitstellungs-Quality-of-Service-Metriken - CDN-QoS - und Benutzer-Wiedergabemetriken.

5. Das Verfahren (100) gemäß einem der vorhergehenden Ansprüche, wobei das Optimierungsmodul ferner Anpassungen in Bezug auf operative Parameter einer Netzwerkschicht bei der Übertragung des bestimmten Video-Streams auf der Grundlage der Analyse bestimmt und veranlasst, dass diese in der Netzwerkschicht angewendet werden, wobei die Anpassungen in operativen Parametern der Netzwerkschicht Änderungen an operativen Parametern in Paketweiterleitungsprotokollen umfassen und die Anpassungen in operativen Parametern der Anwendungsschicht Änderungen an operativen Parametern in der Ratensteuerung und der Ressourcenbereitstellung umfassen, die in Echtzeit auf Kommunikationsprotokolle, Infrastrukturmanagementsysteme und Manifest-Dokumente angewendet werden, die Multimedia-Dienste und Technologieanbieter betreffen.

6. Das Verfahren (100) gemäß einem der vorhergehenden Ansprüche, wobei die QoE-Metriken ausgewählt sind aus einer Gruppe umfassend Netzwerk-Key-Performance-Indikatoren (KPls), Dienstqualitätsmetriken, Benutzeraktivitätsmetriken, Technologieprotokolle, Pipeline-Protokolle und jede Kombination davon.

7. Das Verfahren (100) gemäß einem der vorhergehenden Ansprüche, umfassend Analysieren der mindestens einen QoE-Metrik in Bezug auf mindestens eine QoE-Richtlinie in Echtzeit.

8. Das Verfahren (100) gemäß einem der vorhergehenden Ansprüche, wobei das Empfangen der mindestens einen QoE-Metrik ferner das Empfangen von Metadaten umfasst, die sich auf einen Standort eines Benutzers beziehen, der den Videoplayer verwendet.

9. Das Verfahren (100) gemäß einem der vorhergehenden Ansprüche, umfassend:
Bestimmen, durch das Optimierungsmodul, von Anpassungen in operativen Parametern einer Netzwerkschicht in der Übertragung des bestimmten Video-Streams basierend auf der Analyse;
Erzeugen, durch das Optimierungsmodul, mindestens eines Ereignisses basierend auf der Analyse;
Analysieren, durch das Optimierungsmodul, des Ereignisses in Bezug auf Schwellenwerte, die in der mindestens einen QoE-Richtlinie definiert sind; und
Erzeugen, durch das Optimierungsmodul und wenn das Ereignis die Schwellenwerte nicht erfüllt, eines Alarms, um die Anpassungen einem bestimmten Teilnehmer auf der Video-Streaming-Inhalts-Bereitstellungs-Pipeline, die die Netzwerkschicht steuert, mitzuteilen, oder einer Aktion, um zu bewirken, dass die Anpassungen in der Netzwerkschicht angewendet werden.

10. Das Verfahren (100) gemäß einem der vorhergehenden Ansprüche, umfassend Senden, an die Teilnehmer der Video-Streaming-Inhalts-Bereitstellungs-Pipeline,
der empfangenen mindestens einen QoE-Metrik, so dass die Teilnehmer neue Formeln und Algorithmen deklarieren oder bestehende Formeln und Algorithmen modifizieren, um neue QoE-Metriken aus den empfangenen QoE-Metriken abzuleiten; und
der Ergebnisse der Analyse der mindestens einen QoE-Metrik in Bezug auf die zugehörige mindestens eine QoE-Richtlinie, so dass die Teilnehmer neue QoE-Richtlinien laden oder bestehende QoE-Richtlinien modifizieren, die beim Empfangen von QoE-Metriken zu bewerten sind.

11. Ein nicht-transitorisches computerlesbares Medium, umfassend darauf gespeicherte Befehle, die als Reaktion auf eine Ausführung durch einen oder mehrere Prozessoren den einen oder die mehreren Prozessoren veranlassen, Operationen gemäß dem Verfahren nach einem der Ansprüche 1-10 auszuführen.

12. Ein Optimierungsmodul (300) zur Optimierung der Übertragung von Streaming-Video-Inhalten auf der Grundlage von Quality of Experience-Metriken, QoE, wobei die Streaming-Video-Inhalte von einem Video-Hosting-Server (301) über eine Netzwerkverbindung (303) an einen Video-Player (302) auf einem Endgerät übertragen werden, **dadurch gekennzeichnet, dass** das Optimierungsmodul (300) umfasst:
einen Prozessor (304), der kommunikativ mit mindestens einem Videoplayer verbunden ist; und
einen Speicher (305), der Befehle speichert, die, wenn sie ausgeführt werden, den Prozessor (304) veranlassen zum:
Empfangen (306) mindestens einer QoE-Metrik, die einen bestimmten Video-Stream betrifft, von dem mindestens einen Video-Player, wobei der bestimmte Video-Stream von dem Video-Hosting-Server zu dem Video-Player übertragen wird;
Analysieren (307) der mindestens einen QoE-Metrik in Bezug auf mindestens eine QoE-Richtlinie, um die Optimierung des bestimmten Video-Streams durchzuführen;
Bestimmen (308) von Anpassungen in operativen Parametern einer Anwendungsschicht bei der Übertragung des bestimmten Video-Streams basierend auf der Analyse;
Mitteilen der Anpassungen an entsprechende Teilnehmer an der Video-Streaming-Inhalts-Bereitstellungs-Pipeline, die die Anwendungsschicht bei der Übertragung des bestimmten Video-Streams steuert, wobei die Teilnehmer Video-Inhalts-Anbieter, Video-Inhalts-Herausgeber, Video-Inhalts-Distributoren, Video-Inhalts-Service-Anbieter, Video-Codier/Streaming-Technologie-Anbieter oder Internet-Service-Anbieter eines Media-Players sind; und
Veranlassen (309), dass die Anpassungen in der Anwendungsschicht über die Teilnehmer auf der Video-Streaming-Inhalts-Bereitstellungs-Pipeline angewendet werden.

13. Das Optimierungsmodul (300, 400) gemäß Anspruch 12, umfassend
ein Ereignisgeneratormodul (403), das dazu eingerichtet ist, mindestens ein Ereignis zu erzeugen, wenn die mindestens eine QoE-Metrik die entsprechende mindestens eine QoE-Richtlinie nicht erfüllt; und
ein Richtlinien-Modul (405), das dazu eingerichtet ist, das Ereignis in Bezug auf Schwellenwerte zu analysieren, die in der mindestens einen QoE-Richtlinie definiert sind, und, wenn das Ereignis die Schwellenwerte nicht erfüllt, einen Alarm zu erzeugen, um die Anpassungen einem bestimmten Teilnehmer auf der Video-Streaming-Inhalts-Bereitstellungs-Pipeline mitzuteilen, die die Anwendungsschicht (409) steuert, oder eine Aktion zu erzeugen, um zu bewirken, dass die Anpassungen in der Anwendungsschicht (409) angewendet werden.

14. Das Optimierungsmodul (300, 400) gemäß Anspruch 13, wobei der Prozessor (304) dazu eingerichtet ist, Anpassungen in operativen Parametern einer Netzwerkschicht bei der Übertragung des bestimmten Video-Streams auf der Grundlage der Analyse zu bestimmen, und das Richtlinien-Modul (405) dazu eingerichtet ist, wenn das Ereignis die Schwellenwerte nicht erfüllt, einen Alarm zu erzeugen, um die Anpassungen einem bestimmten Teilnehmer auf der Video-Streaming-Inhalts-Bereitstellungs-Pipeline, die die Netzwerkschicht steuert, mitzuteilen, oder eine Aktion zu erzeugen, um zu bewirken, dass die Anpassungen in der Netzwerkschicht angewendet werden.

15. Das Optimierungsmodul (300, 400) gemäß einem der vorhergehenden Ansprüche 12-14, umfassend ein Erfassungsmodul (401), das in jedem kommunikativ mit dem Prozessor (304) gekoppelten Video-Player implementiert ist, wobei das Erfassungsmodul (401) dazu eingerichtet ist, die mindestens eine QoE-Metrik von dem entsprechenden Videoplayer zu erfassen.

## Revendications

1. Procédé mis en oeuvre par ordinateur (100) pour optimiser la transmission de contenus de vidéo en continu sur la base de mesures de qualité d'expérience utilisateur(QoE), les contenus de vidéo en continu étant transmis d'un serveur d'hébergement vidéo à un lecteur vidéo sur un terminal via une connexion réseau, le procédé comprenant :
la réception (101,201), au niveau d'un module d'optimisation et de la part d'au moins un lecteur vidéo couplé en communication au module d'optimisation, d'au moins une mesure QoE liée à un flux vidéo particulier ;
l'analyse (102,202), par le module d'optimisation, de ladite au moins une mesure QoE par rapport à au moins une politique QoE associée à la dite au moins une QoE afin d'optimiser la transmission du flux vidéo particulier ;
**caractérisé en ce que** le procédé comprend en outre :
la détermination (103,203), par le module d'optimisation, d'ajustements de paramètres opérationnels d'une couche d'application entre le serveur d'hébergement vidéo et le lecteur vidéo dans la transmission du flux vidéo particulier sur la base de l'analyse ;
la notification des ajustements à des participants correspondants du pipeline de diffusion de contenu de vidéo en continu contrôlant la couche d'application dans la transmission du flux vidéo particulier, les participants étant des fournisseurs de contenu vidéo, des éditeurs de contenu vidéo, des distributeurs de contenu vidéo, des fournisseurs de services de contenu vidéo, des fournisseurs de technologie de codage/diffusion en continu de vidéo, ou des fournisseurs de services Internet de diffuseurs de médias ; et
déclenchement, par le module d'optimisation, de l'application (104) des ajustements dans la couche d'application à travers les participants du pipeline de diffusion de contenu de vidéo en continu.

2. Procédé (200) selon la revendication 1, comprenant en outre :
la génération (204), par le module d'optimisation, d'au moins un événement basé sur l'analyse ;
l'analyse (205), par le module d'optimisation, de l'événement par rapport à des seuils définis dans ladite au moins une politique QoE ; et
la génération, par le module d'optimisation et lorsque l'événement ne respecte pas les seuils, de l'une parmi une alarme (206) pour notifier les ajustements à un participant particulier sur le pipeline de diffusion de contenu de vidéo en continu contrôlant la couche d'application, et une action (207) pour déclencher l'application des ajustements dans la couche d'application.

3. Procédé (100) selon l'une quelconque des revendications précédentes, comprenant :
la réception, au niveau du module d'optimisation et de la part dudit au moins un serveur média, d'au moins une mesure de qualité de service (QoS) relative au flux vidéo particulier ; et
l'analyse, par le module d'optimisation, de ladite au moins une mesure QoE par rapport à au moins une politique QoE correspondante, et de ladite au moins une mesure QoS par rapport à au moins une politique QoS afin d'effectuer l'optimisation du flux vidéo particulier.

4. Procédé (100) selon l'une quelconque des revendications précédentes, comprenant la réception, au niveau du module d'optimisation et de la part dudit au moins un lecteur vidéo, d'au moins un parmi des mesures du réseau, des mesures de la qualité de service (QoS) du réseau de diffusion de contenu (CDN), et des mesures de playout utilisateur.

5. Procédé (100) selon l'une quelconque des revendications précédentes, dans laquelle le module d'optimisation détermine en outre des ajustements relatifs aux paramètres opérationnels d'une couche réseau dans la transmission du flux vidéo particulier sur la base de l'analyse, et déclenche leur application dans la couche réseau, les ajustements des paramètres opérationnels de la couche réseau comprenant des modifications de paramètres opérationnels dans des protocoles de transmission de paquets, et les ajustements des paramètres opérationnels de la couche d'application comprenant des modifications de paramètres opérationnels dans le contrôle du débit et l'approvisionnement en ressources appliqué en temps réel à des protocoles de communication, à des systèmes de gestion d'infrastructure et à des documents de manifeste liés à des services multimédias et à des fournisseurs de technologie.

6. Procédé (100) selon l'une quelconque des revendications précédentes, dans laquelle les mesures QoE sont choisies dans un groupe comprenant des indicateurs clés de performance du réseau, KPls, des mesures de la qualité de service, des mesures de l'activité de l'utilisateur, des journaux de la technologie, les journaux du pipeline et toute combinaison de ceux-ci.

7. Procédé (100) selon l'une quelconque des revendications précédentes, comprenant l'analyse de ladite au moins une mesure QoE par rapport à au moins une politique QoE en temps réel.

8. Procédé (100) selon l'une quelconque des revendications précédentes, dans laquelle la réception de ladite au moins une mesure QoE comprend en outre la réception de métadonnées relatives à l'emplacement d'un utilisateur utilisant le lecteur vidéo.

9. Procédé (100) selon l'une quelconque des revendications précédentes, comprenant :
la détermination, par le module d'optimisation, d'ajustements de paramètres opérationnels d'une couche réseau dans la transmission du flux vidéo particulier sur la base de l'analyse ;
la génération, par le module d'optimisation, d'au moins un événement sur la base de l'analyse ;
l'analyse, par le module d'optimisation, de l'événement par rapport à des seuils définis dans ladite au moins une politique QoE ; et
la génération, par le module d'optimisation et lorsque l'événement ne respecte pas les seuils, de l'une parmi une alarme pour notifier les ajustements à un participant particulier sur le pipeline de diffusion de contenu de vidéo en continu contrôlant la couche réseau, et une action pour déclencher l'application des ajustements dans la couche réseau.

10. Procédé (100) selon l'une quelconque des revendications précédentes, comprenant l'envoi aux participants du pipeline de diffusion de contenu de vidéo en continu :
de ladite au moins une mesure QoE reçue, de sorte que les participants déclarent de nouvelles formules et de nouveaux algorithmes ou modifient des formules et des algorithmes existants pour dériver de nouvelles mesures QoE à partir des mesures QoE reçues ; et
des résultats de l'analyse de ladite au moins une mesure QoE par rapport à ladite au moins une politique QoE associée, de sorte que les participants chargent de nouvelles politiques QoE ou modifient des politiques QoE existantes à évaluer lors de la réception de mesures QoE.

11. Support lisible par ordinateur non transitoire ayant des instructions mémorisées dedans qui, en réponse à l'exécution par un ou plusieurs processeurs, amènent le ou les processeurs à effectuer des opérations conformément au procédé de l'une quelconque des revendications 1 à 10.

12. Module d'optimisation (300) pour l'optimisation de la transmission de contenu de vidéo en continu basé sur des mesures de qualité d'expérience (QoE), les contenus de vidéo en continu étant transmis depuis un serveur d'hébergement vidéo (301) à un lecteur vidéo (302) sur un terminal via une connexion réseau (303), **caractérisé en ce que** le module d'optimisation (300) comprend :
un processeur (304) couplé en communication à au moins un lecteur vidéo ; et
une mémoire (305) stockant des instructions qui, lorsqu'elles sont exécutées, amènent le processeur (304) à :
recevoir (306) au moins une mesure QoE liée à un flux vidéo particulier de la part dudit au moins un lecteur vidéo, le flux vidéo particulier étant transmis du serveur d'hébergement vidéo au lecteur vidéo ;
analyser (307) ladite au moins une mesure QoE par rapport à ladite au moins une politique QoE pour effectuer l'optimisation du flux vidéo particulier ;
déterminer (308) des ajustements de paramètres opérationnels d'une couche d'application dans la transmission du flux vidéo particulier sur la base de l'analyse ;
notifier les ajustements aux participants correspondants du pipeline de diffusion de contenu de vidéo en continu contrôlant la couche d'application dans la transmission du flux vidéo particulier, les participants étant des fournisseurs de contenu vidéo, des éditeurs de contenu vidéo, des distributeurs de contenu vidéo, des fournisseurs de services de contenu vidéo, des fournisseurs de technologie de codage/diffusion en continu de vidéo ou des fournisseurs de services Internet de diffuseurs de médias ; et
déclencher (309) l'application des ajustements dans la couche d'application à travers les participants du pipeline de diffusion de contenu de vidéo en continu.

13. Module d'optimisation (300, 400) selon la revendication 12, comprenant
un module générateur d'événements (403) configuré pour générer au moins un événement lorsque ladite au moins une mesure QoE ne satisfait pas à ladite au moins une politique QoE correspondante ; et
un module de politique (405) configuré pour analyser l'événement par rapport à des seuils définis dans ladite au moins une politique QoE et pour générer, lorsque l'événement ne respecte pas les seuils, une parmi une alarme pour notifier les ajustements à un participant particulier sur le pipeline de diffusion de contenu de vidéo en continu contrôlant la couche d'application (409), et une action pour déclencher l'application des ajustements dans la couche d'application (409).

14. Module d'optimisation (300,400) selon la revendication 13, dans lequel le processeur (304) est configuré pour déterminer des ajustements de paramètres opérationnels d'une couche réseau dans la transmission du flux vidéo particulier sur la base de l'analyse, et le module de politique (405) est configuré pour générer, lorsque l'événement ne respecte pas les seuils, une parmi une alarme pour notifier les ajustements à un participant particulier sur le pipeline de diffusion de contenu de vidéo en continu contrôlant la couche réseau, et une action pour déclencher l'application des ajustements dans la couche réseau.

15. Module d'optimisation (300, 400) selon l'une quelconque des revendications 12 à 14 précédentes, comprenant un module de collecte (401) implémenté dans chaque lecteur vidéo couplé en communication au processeur (304), le module de collecte (401) étant configuré pour collecter ladite au moins une mesure QoE à partir du lecteur vidéo correspondant.
